(19) Europäisches Patentamt
European Patent Office
Office européen des brevets

(11) **EP 2 057 514 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(21) Anmeldenummer: **06818006.6**

(22) Anmeldetag: **30.08.2006**

(51) Int Cl.:
**G05B 23/02** *(2006.01)*

(86) Internationale Anmeldenummer:
**PCT/DE2006/001515**

(87) Internationale Veröffentlichungsnummer:
**WO 2008/025303 (06.03.2008 Gazette 2008/10)**

(54) **VERFAHREN ZUR ÜBERWACHUNG EINES ANTRIEBS SOWIE VORRICHTUNG ZUR DURCHFÜHRUNG DES VERFAHRENS**

METHOD FOR MONITORING A DRIVE AND DEVICE FOR CARRYING OUT SAID METHOD

PROCÉDÉ POUR SURVEILLER UN ENTRAÎNEMENT, ET DISPOSITIF SERVANT À LA MISE EN OEUVRE DE CE PROCÉDÉ

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**13.05.2009 Patentblatt 2009/20**

(73) Patentinhaber: **Siemens Aktiengesellschaft 80333 München (DE)**

(72) Erfinder:
• **BELLM, Hubert
76297 Stutensee (DE)**
• **ENS, Wolfgang
76351 Linkenheim (DE)**
• **GRIEB, Herbert
76316 Malsch (DE)**

(56) Entgegenhaltungen:
**EP-A2- 0 167 001         WO-A-2005/124488
DE-A1-102004 057 712      GB-A- 800 953**

# Beschreibung

Die Erfindung betrifft ein Verfahren zur Überwachung eines Antriebs mit einem Antriebsmotor, der in einer Antriebswelle eine Drehbewegung erzeugt, und mit einer Ansteuereinrichtung für den Antriebsmotor sowie eine zur Durchführung des Verfahrens geeignete Einrichtung.

In automatisierungstechnischen Anlagen werden unter anderem Produktionsmaschinen, Fördereinrichtungen und Verpackungsmaschinen eingesetzt. Häufig enthalten diese einen oder mehrere Antriebe der oben genannten Art. Bei Verpackungsmaschinen gibt es häufig Stillstandszeiten, die zum Beispiel durch Verpackungsreste in der Maschine, Füllgut in einer Siegelnaht oder unvollständig gefüllte Verpackungen verursacht werden. Weitere Ursachen können mechanische Defekte an der Maschine sein. Für eine möglichst hohe Produktivität einer Verpackungsmaschine wird ein möglichst großer Durchsatz bei geringem Ausschuss angestrebt. Unerwartete Stillstandszeiten reduzieren jedoch den Durchsatz und sollen daher weitgehend vermieden werden. Bisher werden Verpackungsmaschinen in der Regel vom Bedienpersonal visuell überwacht und in fest vorgeschriebenen Zeitabständen gewartet. Stillstandszeiten sind daher nicht immer vorhersehbar und werden in Kauf genommen. Zudem bringt die zunehmende Verwendung geregelter Antriebe bei Verpackungsmaschinen das Problem mit sich, dass eine anwachsende Schwergängigkeit einer oder mehrerer Antriebsachsen der Verpackungsmaschine vom Bedienpersonal nicht mehr erkannt werden kann.

Aus der WO 2005/124488 A1 ist bereits ein intelligenter Antrieb bekannt, in welchem seine mechanischen Komponenten, wie zum Beispiel Getriebe, Zahnriemen, Bremsen und Führungen, durch Überwachung der Schwergängigkeit des Antriebs auf zunehmenden Verschleiß überwacht werden. Beispielsweise wird dort für eine Langzeitüberwachung der Motorstrom zur Berechnung der mittleren Leistung als charakteristische Größe herangezogen.

Der Erfindung liegt die Aufgabe zugrunde, ein Verfahren und eine Einrichtung zur Überwachung eines Antriebs zu schaffen, die es ermöglichen, eine erhöhte Schwergängigkeit mit geringem Aufwand zuverlässig zu erkennen und eine quantitative Diagnoseaussage über die Schwergängigkeit zu treffen.

Zur Lösung dieser Aufgabe weist das neue Verfahren der eingangs genannten Art die im Anspruch 1 angegebenen Merkmale auf. In den abhängigen Ansprüchen sind vorteilhafte Weiterbildungen des Verfahrens, im Anspruch 5 eine Einrichtung zur Durchführung des Verfahrens beschrieben.

Die Erfindung hat den Vorteil, dass eine erhöhte Schwergängigkeit erkannt werden kann, ohne den Antrieb aus beispielsweise einer Verpackungsmaschine zu entfernen. Zudem wird die Überwachung des Antriebs mit besonders geringem messtechnischem Aufwand erreicht, da Position, Geschwindigkeit und Drehmoment eines Antriebs üblicherweise durch eine elektronische Antriebssteuerung eingestellt und mit ohnehin vorhandenen Sensoren erfasst werden. Das Verfahren ist daher in vorteilhafter Weise durchführbar, ohne dass eine zusätzliche, speziell für das Verfahren vorgesehene Sensorik erforderlich wäre. Im Sinne einer prädiktiven Wartung wird es durch die Erfindung ermöglicht, einen fehlerhaften Zustand eines Antriebs bereits zu erkennen, bevor es zu einer signifikanten Störung oder zu einem Ausfall des Antriebs kommt. Ein ungeplanter Stillstand beispielsweise einer Verpackungsmaschine kann damit vermieden werden und Wartungen können beispielsweise in zyklischen Wartungsintervallen durchgeführt werden, in welchen eine Reparatur oder ein Austausch des Antriebs mit erhöhter Schwergängigkeit ohne weitere Produktionsausfälle vorgenommen werden kann. Dabei hat sich gezeigt, dass eine erhöhte Schwergängigkeit einer oder mehrerer Antriebsachsen bei Verpackungsmaschinen ein besonders zuverlässiger Indikator für einen bevorstehenden Ausfall der Maschine ist. Da keine zusätzliche Sensorik benötigt wird, ist das Verfahren auch bei bereits im Einsatz befindlichen Verpackungsmaschinen meist ohne mechanischen Veränderungen nachrüstbar. Häufig genügt es, lediglich ein Betriebsprogramm einer elektronischen Antriebssteuerung um entsprechende Programmroutinen zu ergänzen.

Zur Überwachung wird der Antrieb derart angesteuert, dass sich die Geschwindigkeit der Drehbewegung im Wesentlichen gemäß einem vorbestimmten Verlauf verändert, der einen Vorzeichenwechsel in einem zeitlichen Bereich mit einer im Wesentlichen konstanten Steigung der Geschwindigkeit aufweist. Dabei findet im Zeitpunkt des Vorzeichenwechsels eine Richtungsumkehr der Drehbewegung statt. Die Differenz der Werte des durch den Antriebsmotor erzeugten Drehmoments vor und nach der Richtungsumkehr der Drehbewegung stellt eine charakteristische Größe des sich einstellenden Verlaufs des durch den Antriebsmotor erzeugten Drehmoments dar. Diese Differenz wird ermittelt, mit einem dafür vorgegebenen Referenzwert verglichen und ein Antriebsfehler durch ein Signal angezeigt, wenn die Veränderung gegenüber dem Referenzwert einen vorgegebenen Schwellwert übersteigt. Die Differenz der Werte des durch den Antriebsmotor erzeugten Drehmoments vor und nach der Richtungsumkehr der Drehbewegung entspricht dem Anteil des Drehmoments, der durch Reibung verursacht wird. Diese Differenz ermöglicht somit in vorteilhafter Weise eine quantitative Diagnoseaussage über die Zunahme der Schwergängigkeit des Antriebs.

Im Falle eines Elektromotors als Antriebsmotor, dessen Motorstrom sich zumindest näherungsweise proportional zum Drehmoment verhält, entspricht der Verlauf des Motorstroms demjenigen des Drehmoments. Es ist daher in vorteilhafter Weise möglich, anstelle der charakteristischen Größe des Drehmomentverlaufs eine entsprechende charakteristische Größe des Motorstromverlaufs zur Antriebsüberwachung auszuwerten. Das hat insbesondere den Vorteil, dass keine aufwendigen Drehmomentsensoren erforderlich sind. Eine gesonderte Messung des Motorstroms ist meist nicht erforderlich, da dieser in der elektronischen Antriebssteuerung üblicherweise geregelt wird und somit ohnehin als Wert vorliegt. Der mit der Durchführung des Verfahrens verbundene Aufwand wird daher weiter verringert, da keine Sensorik zur Drehmomenterfassung benötigt wird.

Ein Vergleich mit einem exemplarspezifischen Referenzwert wird in vorteilhafter Weise ermöglicht, wenn der Referenzwert bei der Inbetriebnahme des Antriebs und somit im Gutzustand ermittelt und abgespeichert wird. Dadurch kann die Zuverlässigkeit der Diagnoseaussage weiter verbessert werden. Wenn die Überwachung des Antriebs zyklisch in Betriebspausen durchgeführt wird, erfolgt in vorteilhafter Weise keinerlei Störung des Produktivbetriebs durch den Überwachungsvorgang.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1     ein Blockschaltbild eines Antriebs und

Figur 2     Zeitdiagramme von Geschwindigkeit und Motordrehmoment.

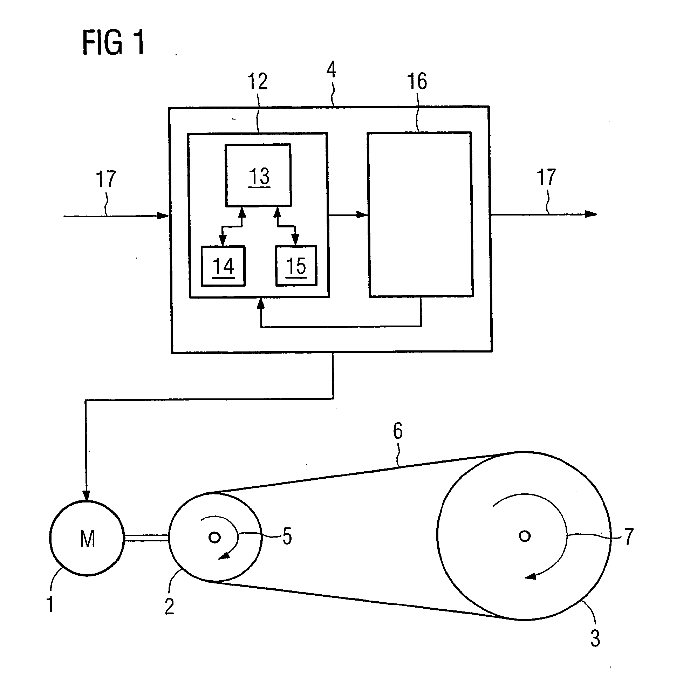

Gemäß Figur 1 weist ein Antrieb einen Antriebsmotor 1, eine Antriebswelle 2, eine Antriebswelle 3 und eine elektrische Antriebssteuerung 4 auf. Die Antriebswelle 2 ist mit der Abtriebswelle 3 durch einen Zahnriemen 6 mechanisch verkoppelt. Antriebswelle 2, Zahnriemen 6 und Abtriebswelle 3 bilden somit ein Getriebe, mit welchem eine erste Drehbewegung 5 der Antriebswelle 2 in eine zweite Drehbewegung 7 der Abtriebswelle 3 gewandelt wird. Zur Überwachung des Antriebs auf Einhalten einer geforderten Leichtgängigkeit ist die Antriebssteuerung 4 mit einer Überwachungseinrichtung 12 versehen, die einen Mikrocontroller 13 sowie einen ersten Speicher 14 und einen zweiten Speicher 15 aufweist. Im ersten Speicher 14 wird bei der Inbetriebnahme ein zeitlicher Verlauf des Motordrehmoments als Referenzverlauf abgelegt, der im Neuzustand, das heißt bei fehlerfreiem Antrieb, ermittelt wurde. Der zweite Speicher 15 dient zur Abspeicherung eines entsprechenden Drehmomentverlaufs, der sich während eines späteren Überwachungsvorgangs einstellt. Zur Durchführung eines Überwachungsvorgangs gibt die Überwachungseinrichtung 12 einer Leistungselektronik 16 einen vorbestimmten Verlauf der Geschwindigkeit der ersten Drehbewegung 5 der Antriebswelle 2 vor. Die Leistungselektronik 16 stellt den dazu erforderlichen Motorstrom ein, dessen Verlauf dem Drehmomentverlauf entspricht und im zweiten Speicher 15 hinterlegt wird. Zur Auswertung und Diagnose werden aus dem im ersten Speicher 14 hinterlegten Referenzverlauf und dem im zweiten Speicher 15 abgelegten, aktuellen Verlauf zueinander korrespondierende Werte einer oder mehrerer charakteristischer Größen ermittelt und miteinander verglichen. Weichen die Werte in unzulässiger Weise voneinander ab, so wird über einen Feldbus 17 an eine in der Figur 1 der Übersichtlichkeit wegen nicht dargestellte Leitstation eine Fehlermeldung ausgegeben. Über denselben Feldbus 17 erhält die elektronische Antriebssteuerung 4 während eines Produktivbetriebs Sollvorgaben für Position und/oder Geschwindigkeit des Antriebs. Bei dem dargestellten Antrieb kann es sich beispielsweise um einen Antrieb für eine Achse einer Verpackungsmaschine handeln. Die Last des Antriebsmotors 1 entspricht der Summe der Trägheitsmomente und der Reibungsmomente der mit dem Antriebsmotor 1 angetriebenen Maschinenteile.

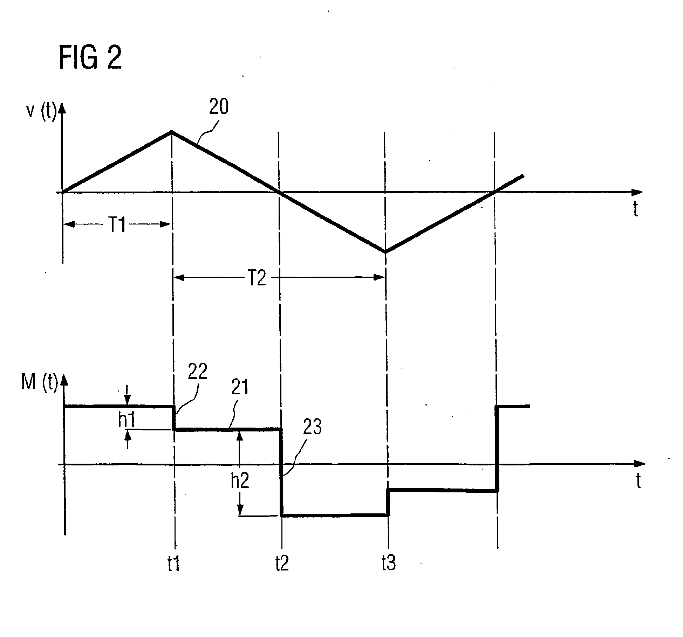

Wird der Antrieb in einer Referenzfahrt mit einem rampenförmigen Geschwindigkeitsverlauf v(t) gemäß Figur 2, oben, bewegt, so ergibt sich der in Figur 2, unten, prinzipiell dargestellte Verlauf des Motordrehmoments M(t). In Figur 2 ist im oberen Zeitdiagramm ein rampenförmiger Verlauf 20 der Geschwindigkeit v(t) der ersten Drehbewegung der Antriebswelle dargestellt, der zur Überwachung des Antriebs auf Einhalten einer geforderten Leichtgängigkeit durch eine entsprechende Ansteuerung der Leistungselektronik durchfahren wird. Auf der Abszisse ist die Zeit t, auf den Ordinaten der beiden Diagramme sind die Geschwindigkeit v(t) der Antriebswelle bzw. das Drehmoment M(t) des Antriebsmotors qualitativ aufgetragen. In einem ersten zeitlichen Bereich T1 besitzt die Geschwindigkeit v(t) eine erste konstante Steigung, die zu einem Zeitpunkt t1 in eine zweite konstante Steigung, welche gegenüber der ersten ein umgekehrtes Vorzeichen hat, übergeht. Die zweite konstante Steigung wird über einen zweiten zeitlichen Bereich T2 konstant gehalten. Zu einem Zeitpunkt t2 innerhalb des zweiten zeitlichen Bereichs T2 findet ein Richtungswechsel der Bewegung statt, das heißt der Verlauf 20 der Geschwindigkeit v(t) hat hier einen Nulldurchgang und die Geschwindigkeit ändert damit ihr Vorzeichen. Zu einem Zeitpunkt t3 nimmt der Verlauf 20 der Geschwindigkeit v(t) erneut die erste Steigung an. Für die Darstellung des sich dabei einstellenden Verlaufs 21 des Motordrehmoments M(t) wurde der durch Reibung verursachte Drehmomentanteil vereinfachend als unabhängig vom Betrag der Geschwindigkeit v(t) angenommen. Der Verlauf 21 des Motordrehmoments M(t) weist charakteristische Flanken auf, beispielsweise eine Flanke 22 und eine Flanke 23. Die Flanke 22 ist mit dem Richtungswechsel der Steigung der Rampen des Verlaufs 20 zum Zeitpunkt t1 verknüpft, das heißt mit der zeitlichen Ableitung der Geschwindigkeit v(t) und damit der Beschleunigung der Antriebswelle. Für die Höhe h1 der Flanke 22 gilt:

$$h1 = 2 * a * \theta,$$

mit

a - Betrag der Beschleunigung im ersten und zweiten zeitlichen Bereich T1 bzw. T2 und
θ - Trägheitsmoment der Maschinenteile.

Die Flanke 22 ist somit dem durch das Trägheitsmoment verursachten Anteil des Motordrehmoments zuzuordnen.

Die Flanke 23 ist mit dem Vorzeichenwechsel der Geschwindigkeit v(t) zum Zeitpunkt t2 verknüpft. Sie entsteht aufgrund der Reibung der Maschinenteile. Für die Höhe h2 der Flanke 23 gilt:

$$h2 = 2 * MR$$

mit

MR - durch Reibung verursachtes Drehmoment.

Da sich das Trägheitsmoment der Antriebslast im Betrieb von Verpackungsmaschinen normalerweise nicht ändern wird, sehr wohl aber die Reibung, kann die Höhe h2 der Flanke 23 als Indikator für die Schwergängigkeit der Verpackungsmaschine herangezogen werden, indem in Produktionspausen eine Testfahrt durchgeführt, die Höhe h2 der Flanke 23 ermittelt und mit einem zuvor bei einer Referenzfahrt ermittelten Wert verglichen wird. Übersteigt die Abweichung einen vorgegebene Schwelle, so deutet dies auf einen Fehler des Antriebs hin. Bevor die Verpackungsmaschine in Folge eines Defekts ausfällt, kann aus der Tendenz aufeinander folgend ermittelter Werte verschiedener Flankenhöhen h2 abgeleitet werden, ob bereits im Zeitraum bis zum nächsten Wartungszyklus mit einem Maschinenausfall zu rechnen ist oder nicht. Unvorhergesehene Stillstandszeiten können daher weitgehend vermieden werden.

**Patentansprüche**

1. Verfahren zur Überwachung eines Antriebs mit einem Antriebsmotor (1), der in einer Antriebswelle (2) eine Drehbewegung (5) erzeugt, und mit einer Ansteuereinrichtung (4) für den Antriebsmotor (1), wobei der Wert einer charakteristischen Größe eines sich einstellenden Verlaufs (21) des durch den Antriebsmotor (1) erzeugten Drehmoments (M) ermittelt, mit einem vorgegebenen Referenzwert der charakteristischen Größe verglichen und ein Antriebsfehler durch ein Signal (17) angezeigt wird, wenn die Abweichung einen vorgegebenen Schwellwert übersteigt,
**dadurch gekennzeichnet,**
**dass** der Antriebsmotor (1) derart angesteuert wird, dass sich die Geschwindigkeit (v) der Drehbewegung gemäß einem vorbestimmten Verlauf (20) verändert und dabei eine Richtungsumkehr der Drehbewegung bewirkt wird, wobei der vorbestimmte Verlauf (20) der Geschwindigkeit (v) der Drehbewegung einen Vorzeichenwechsel in einem zeitlichen Bereich (T2) mit einer konstanten Steigung aufweist, und
**dass** die charakteristische Größe die Differenz der Werte des durch den Antriebsmotor (1) erzeugten Drehmoments (M) vor und nach der Richtungsumkehr der Drehbewegung ist.

2. Verfahren nach Anspruch 1, **dadurch gekennzeichnet, dass** der Antriebsmotor (1) ein Elektromotor ist, dessen Motorstrom sich näherungsweise proportional zum Drehmoment verhält und dass anstelle der charakteristischen Größe des Drehmomentverlaufs eine entsprechende charakteristische Größe des Motorstromverlaufs zur Antriebsüberwachung ausgewertet wird.

3. Verfahren nach Anspruch 1 oder 2, **dadurch gekennzeichnet, dass** der Referenzwert bei der Inbetriebnahme des Antriebs ermittelt und abgespeichert wird.

4. Verfahren nach einem der vorhergehenden Ansprüche, **dadurch gekennzeichnet, dass** die Überwachung zyklisch oder azyklisch in Betriebspausen oder beim An- und/oder Abschalten des Antriebes erfolgt.

5. Einrichtung zur Durchführung des Verfahrens zur Überwachung eines Antriebs nach einem der vorhergehenden Ansprüche mit einem Antriebsmotor (1) zur Erzeugung einer ersten Drehbewegung (5) in einer Antriebswelle (2) und mit einer Ansteuereinrichtung (4) für den Antriebsmotor (1), die derart ausgestaltet ist, dass der Wert einer charakteristischen Größe eines sich einstellenden Verlaufs (21) des durch den Antriebsmotor (1) erzeugten Drehmoments (M) ermittelt, mit einem vorgegebenen Referenzwert der charakteristischen Größe verglichen und ein Antriebsfehler durch ein Signal angezeigt wird, wenn die Abweichung einen vorgegebenen Schwellwert übersteigt,
**dadurch gekennzeichnet,**
**dass** die Ansteuereinrichtung zudem derart ausgestaltet ist, dass sich die Geschwindigkeit (v) der Drehbewegung gemäß einem vorbestimmten Verlauf (20) verändert und dass dabei eine Richtungsumkehr der Drehbewegung bewirkt wird, wobei der vorbestimmte Verlauf (20) der Geschwindigkeit (v) der Drehbewegung einen Vorzeichenwechsel in einem zeitlichen Bereich (T2) mit einer konstanten Steigung aufweist, und
**dass** die charakteristische Größe die Differenz der Werte des durch den Antriebsmotor (1) erzeugten Drehmoments (M) vor und nach der Richtungsumkehr der Drehbewegung ist.

**Claims**

1. Method for monitoring a drive having a drive motor (1) which generates a rotational movement (5) in a drive shaft (2), and having an actuation device (4) for the drive motor (1), wherein the value of a characteristic variable of a profile (21) which occurs for the torque (M) generated by the drive motor (1) is determined and compared with a predefined reference value of the characteristic variable, and a drive error is displayed by means of a signal (17) if the deviation exceeds a predefined threshold value, **characterized** **in that** the drive motor (1) is actuated in such a way that the speed (v) of the rotational movement changes in accordance with a predetermined profile (20), and in the process a reversal of direction of the rotational movement is brought about, wherein the predetermined profile (20) of the speed (v) of the rotational movement has a change of sign in a chronological range (T2) with a constant gradient, and **in that** the characteristic variable is the difference between the values of the torque (M) generated by the drive motor (1), before and after the reversal of direction of the rotational movement.

2. Method according to Claim 1, **characterized in that** the drive motor (1) is an electric motor whose motor current behaves approximately proportionally with respect to the torque, and **in that** instead of the characteristic variable of the torque profile a corresponding characteristic variable of the motor current profile is evaluated for the purpose of monitoring the drive.

3. Method according to Claim 1 or 2, **characterized in that** the reference value is determined and stored when the drive is put into operation.

4. Method according to one of the preceding claims, **characterized in that** the monitoring takes place cyclically or acyclically in operating pauses or when the drive is switched on and/or off.

5. Device for carrying out the method for monitoring a drive according to one of the preceding claims, having a drive motor (1) for generating a first rotational movement (5) in a drive shaft (2), and having an actuation device (4) for the drive motor (1), which is configured such that the value of a characteristic variable of a profile (21) which occurs for the torque (M) generated by the drive motor (1) is determined and compared with a predefined reference value of the characteristic variable, and a drive error is displayed by means of a signal if the deviation exceeds a predefined threshold value, **characterized** **in that** the actuation device is additionally configured in such a way that the speed (v) of the rotational movement changes in accordance with a predetermined profile (20), and in that in the process a reversal of direction of the rotational movement is brought about, wherein the predetermined profile (20) of the speed (v) of the rotational movement has a change of sign in a chronological range (T2) with a constant gradient, and **in that** the characteristic variable is the difference between the values of the torque (M) generated by the drive motor (1), before and after the reversal of direction of the rotational movement.

**Revendications**

1. Procédé de contrôle d'un entraînement ayant un moteur ( 1 ) d'entraînement, qui produit un mouvement ( 5 ) de rotation dans un arbre ( 2 ) d'entraînement, et comprenant un dispositif ( 4 ) de commande du moteur ( 1 ) d'entraînement, la valeur d'une grandeur caractéristique d'une courbe ( 21 ) se réglant du couple ( M ) de rotation produit par le moteur ( 1 ) d'entraînement étant déterminée, étant comparée à une valeur de référence prescrite de la grandeur caractéristique et un défaut de l'entraînement étant indiqué par un signal ( 17 ) lorsque l'écart dépasse une valeur de seuil prescrite, **caractérisé** **en ce que** le moteur ( 1 ) d'entraînement est commandé de manière à modifier la vitesse ( V ) du mouvement de rotation suivant une courbe ( 20 ) déterminée à l'avance et à provoquer ainsi une inversion du sens de rotation, la courbe ( 20 ) déterminée à l'avance de la vitesse ( v ) du mouvement de rotation présentant un changement de signe dans une plage ( T2 ) temporelle avec une pente constante, et **en ce que** la grandeur caractéristique est la différence des valeurs du couple ( M ) de rotation produit par le moteur ( 1 ) d'entraînement avant et après l'inversion du sens de rotation.

2. Procédé suivant la revendication 1, **caractérisé en ce que** le moteur ( 1 ) d'entraînement est un moteur électrique, dont le courant du moteur est à peu près proportionnel au couple de rotation, et **en ce que**, au lieu de la grandeur caractéristique de la courbe du couple de rotation, on exploite pour le contrôle de l'entraînement une grandeur caractéristique correspondante de la courbe du courant du moteur.

3. Procédé suivant la revendication 1 ou 2, **caractérisé en ce qu'**on détermine et mémorise la valeur de référence lors de la mise en fonctionnement de l'entraînement.

4. Procédé suivant l'une des revendications précédentes, **caractérisé en ce qu'**on effectue le contrôle d'une manière cyclique ou d'une manière acyclique dans des intervalles de fonctionnement ou lors du démarrage et/ou de l'arrêt de l'entraînement.

5. Dispositif pour la mise en ouvre du procédé de contrôle d'un entraînement suivant l'une des revendications précédentes, comprenant un moteur ( 1 ) d'entraînement pour la production d'un premier mouvement de rotation dans un arbre ( 2 ) d'entraînement et un dispositif ( 4 ) de commande du moteur ( 1 ) d'entraînement, qui est conformé de manière à déterminer la valeur d'une grandeur caractéristique d'une courbe ( 21 ) qui se règle du couple ( M ) de rotation produit vers le moteur ( 1 ) d'entraînement, à la comparer à une valeur de référence prescrite de la grandeur caractéristique et à indiquer un défaut de l'entraînement par un signal si l'écart dépasse une valeur de seuil prescrite,
**caractérisé**
**en ce que** le dispositif de commande est conformé, en outre, de manière à ce que la vitesse ( V ) du mouvement de rotation se modifie suivant une courbe ( 20 ) déterminée à l'avance et en ce qu'il est ainsi provoqué une inversion du sens de rotation, la courbe ( 20 ) déterminée à l'avance de la vitesse ( v ) du mouvement de rotation présentant un changement de signe dans une plage ( T2 ) temporelle avec une pente constante, et
**en ce que** la grandeur caractéristique de différence est la valeur du couple ( M ) de rotation produit par le moteur ( 1 ) d'entraînement avant et après l'inversion du sens de rotation.

FIG 1

## FIG 2

**IN DER BESCHREIBUNG AUFGEFÜHRTE DOKUMENTE**

**In der Beschreibung aufgeführte Patentdokumente**

- WO 2005124488 A1